# EUROPÄISCHE PATENTSCHRIFT

(11) **EP 1 339 965 B1**
(45) Veröffentlichungstag und Bekanntmachung des Hinweises auf die Patenterteilung: **20.04.2005**
(21) Anmeldenummer: 01984741.7
(22) Anmeldetag: 16.11.2001
(51) Int. Cl.: F02M 43/04, F02M 43/00, F02M 51/06, B60L 11/18

(54) **EINSPRITZEINRICHTUNG ZUM DOSIERTEN EINSPRITZEN VON ZWEI FLÜSSIGKEITEN IN EINEN REAKTIONSRAUM**
INJECTION SYSTEM FOR DOSED INJECTIONS OF TWO LIQUIDS IN A REACTION CHAMBER
SYSTEME D'INJECTION PERMETTANT D'INJECTER DEUX LIQUIDES DANS UNE CHAMBRE DE REACTION DE MANIERE DOSEE

(30) Priorität: 08.12.2000 DE 10061035
(43) Veröffentlichungstag der Anmeldung: 03.09.2003
(73) Patentinhaber: FEV Motorentechnik GmbH, 52078 Aachen (DE)
(72) Erfinder: LAUMEN, Hermann, Josef, 52525 Heinsberg (DE)
(74) Vertreter: Langmaack, Jürgen
(86) Internationale Anmeldenummer: PCT/EP2001/013288
(87) Internationale Veröffentlichungsnummer: WO 2002/046599

(56) Entgegenhaltungen:
- DE-A- 3 012 418
- DE-A- 19 918 997
- US-A- 4 699 103
- PATENT ABSTRACTS OF JAPAN vol. 1997, no. 10, 31. Oktober 1997 (1997-10-31) -& JP 09 144606 A (MITSUBISHI MOTORS CORP), 3. Juni 1997 (1997-06-03)

## Beschreibung

In einer Reihe von Anwendungsfällen ist es erforderlich, zwei verschiedene Flüssigkeiten in einen Reaktionsraum dosiert einzubringen, in dem die beiden Flüssigkeiten miteinander zur Reaktion gebracht werden. Ein derartiger Anwendungsfall ist beispielsweise ein sogenannter Reformer für eine Brennstoffzelle, in der im wesentlichen Wasserstoff und Sauerstoff in einer "kalten Verbrennung" zu Wasser reagieren und hierbei elektrische Energie erzeugen.

Ein Einsatz derartiger Brennstoffzellen als Alternative für Verbrennungsmotoren an Fahrzeugen setzt voraus, daß ausreichende Mengen an Wasserstoff in gasförmiger oder kryogener Form in einem Speicher mitgeführt werden. Dies erfordert einen großen Bauraum und ein großes Gewicht und stellt darüber hinaus ein erhebliches Gefährdungspotential dar.

Es bietet sich daher an, den Wasserstoff mittels eines katalytischen Reformers unmittelbar vor der Umsetzung in einer Brennstoffzelle aus anderen Kraftstoffen, beispielsweise Otto-Kraftstoff, Diesel-Kraftstoff oder Methanol zu erzeugen. In einem derartigen Reformer reagiert der eingedüste Kraftstoff mit zusätzlich eingedüstem Wasser zu Kohlendioxid und Wasserstoff, der dann in der Brennstoffzelle in elektrischer Energie in bekannter Weise umgesetzt werden kann.

Aus DE 196 23 937 C1 und DE 199 18 997 A ist es bekannt, für den Anwendungsfall der Brennstoffzelle die beiden Flüssigkeiten flüssig oder dampfförmig im erforderlichen Mengenverhältnis vorzumischen und dann dem Reaktor bzw. Reformer zuzuführen. DE 196 23 937 C1 sieht hierbei für wechselnde Lastanforderungen vor, daß in einer Gemischaufbereitungsstufe ein Sollwert der Mischung aufrechterhalten wird und danach die Zufuhr der beiden Flüssigkeiten gesteuert wird. Die Anpassung an unterschiedliche Lastanforderungen erfolgt durch gesteuerten Abzug des Gemisches aus der Gemischaufbereitungsstufe.

US 4 699 103 offenbart eine Einspritzeinrichtung für zwei Flüssigkeiten. Die erste Flüssigkeit wird direkt durch eine klassische Verteiler pumpe eingespritzt und die zweite Flüssigkeit durch ein elektromagnetisches Ventil gesteuert. Diese Vorrichtung ist besonders adaptiert um Voreinspritzungen durchzuführen.

Der Erfindung liegt nun die Aufgabe zugrunde, eine Einspritzeinrichtung zu schaffen, die es gestattet, zwei Flüssigkeiten, im Anwendungsfall der Brennstoffzelle sind dies ein Kraftstoff und Wasser, unmittelbar in einen Reaktionsraum über eine gemeinsame Düse dosiert einzubringen. Dabei soll sowohl die Gesamtmenge, aber auch das Mengenverhältnis der beiden Flüssigkeiten zueinander in Abhängigkeit von unterschiedlichen Betriebspunkten und/oder wechselnden Lastanforderungen variierbar sein.

Diese Aufgabe wird gemäß der Erfindung gelöst durch eine Einspritzeinrichtung zum dosierten Einspritzen von zwei Flüssigkeiten in vorgebbaren Mengenverhältnissen in einen Reaktionsraum, mit einem Gehäuse, das eine Einspritzdüse aufweist, deren Düsenöffnung mit Ventilsitz im Gehäuse und einem auf dem Ventilsitz aufsetzbaren Ventilkörper ein Einspritzventil bildet, wobei der Ventilkörper durch einen ersten Aktuator bewegbar ist, mit einem der Düsenöffnung zugeordneten Sammelraum, der mit einer Zuleitung für die erste Flüssigkeit und mit einer Zuleitung für die zweite Flüssigkeit verbunden ist, wobei wenigstens eine Zuleitung zum Sammelraum durch ein Dosierventil absperrbar ist, das über einen zweiten Aktuator betätigbar ist, und wobei eine der beiden Flüssigkeiten unter höherem Druck steht als die andere Flüssigkeit, sowie mit einer mit den beiden Aktuatoren in Verbindung stehenden Steuereineinrichtung über die die beiden Aktuatoren in Abhängigkeit von einer lastbedingten Gesamteinspritzmenge und in Abhängigkeit eines vorgebbaren Mengenverhältnisses der beiden Flüssigkeiten ansteuerbar sind, wobei wenigstens ein Ventil getaktet angesteuert wird. Mit Hilfe einer derart ausgebildeten Einspritzeinrichtung ist es möglich, beide Flüssigkeiten vor Öffnung des Einspritzventils in den Sammelraum der Einspritzeinrichtung vorzulagern. Dadurch, daß für eine der Flüssigkeiten, vorzugsweise für die unter höherem Druck stehende Flüssigkeit ein gesondertes Dosierventil vorgesehen ist, besteht die Möglichkeit, eine vorgebbare Menge dieser Flüssigkeit in den Sammelraum der Einspritzeinrichtung einzuführen. Wird bei Betätigung des Einspritzventils die Düsenöffnung freigegeben, wird diese vorgelagerte Menge der einen Flüssigkeit durch die dann zuströmende Menge der anderen Flüssigkeit mitgerissen. Damit kann die Gesamteinspritzmenge schon unter Vermischung beider Flüssigkeitsanteile unmittelbar in den Reaktionsraum eingespritzt werden. Durch die Dauer der Öffnungszeit des Einspritzventils erfolgt die Zudosierung der anderen Flüssigkeit, vorzusgweise der unter geringerem Druck stehenden Flüssigkeit sowohl hinsichtlich der für die Reaktion benötigten Teilmenge als auch der Gesamteinspritzmenge.

Durch die Anordnung eines zusätzlichen Dosierventils, das unabhängig vom Einspritzventil getaktet ansteuerbar ist, ergeben sich nun vielfältige Möglichkeiten sowohl zur Einstellung der einzuspritzenden Gesamtmenge als auch zur Einstellung des Mengenverhältnisses der beiden einzuspritzenden Flüssigkeiten zueinander. Nicht nur durch die während der Öffnungszeit des Dosierventils für die unter höherem Druck stehende Flüssigkeit erfolgende Verdrängung der anderen Flüssigkeit aus dem Sammelraum, durch die eine abgestimmte Flüssigkeitsmenge im Sammelraum vorgelagert werden kann, sondern auch durch ein zeitweise überlappendes Öffnen des Dosierventils in bezug auf das Einspritzventil oder auch durch ein intermittierendes bzw. getaktetes Öffnen des Dosierventils während der Öffnungsdauer des Einspritzventils lassen sich unterschiedliche Mischungsverhältnisse zwischen diesen beiden Flüssigkeiten und die Gesamteinspritzmenge einstellen.

Besonders zweckmäßig ist es, wenn die Ausmündung der Zuleitung für die Flüssigkeit mit dem höheren Druck in der Nähe des Ventilsitzes des Ventilkörpers des Einspritzventils angeordnet ist. Dadurch wird es möglich, daß beim Einführen der Flüssigkeit mit dem höheren Druck in den Sammelraum die andere Flüssigkeit in ihren Druckraum "zurückgedrückt" wird. Da nach dem Schließen des Dosierventils im Sammelraum die vorgelagerte Flüssigkeitsmenge unter dem Druck der anderen Flüssigkeit steht, wird beim Öffnen des Einspritzventils und bei geschlossenem Dosierventil die vorgelagerte Flüssigkeit in den Reaktionsraum eingespritzt, wobei die andere Flüssigkeit nur geringfügig zeitverzögert nachfolgt, so daß eine einwandfreie Reaktion gewährleistet ist.

In weiterer vorteilhafter Ausgestaltung der Erfindung ist vorgesehen, daß die Aktuatoren als elektromagnetische Aktuatoren ausgebildet sind, wobei die bewegbaren Ventilkörper des Einspritzventils und des Dosierventils jeweils mit einem Anker und mit einer in Schließrichtung wirksamen Rückstellfeder verbunden sind. Derartige Aktuatoren lassen sich über eine entsprechende Steuereinrichtung hinsichtlich der Öffnungsdauer sehr genau ansteuern, so daß bei jeweils vorgegebenen Drücken der der Einspritzeinrichtung zuzuführenden Flüssigkeiten nach entsprechender Kalibrierung eine Einspritzeinrichtung zur Verfügung steht, die eine sehr genaue bedarfsabhängige Ansteuerung des Dosierventils und/oder des Einspritzventils erlaubt.

Weitere Merkmale und Ausgestaltungen der Erfindung sind den Ansprüchen zu entnehmen.

Die Erfindung wird anhand schematischer Zeichnungen näher erläutert. Es zeigen:
- Fig. 1: ein Blockschaltbild einer Einrichtung zur Erzeugung elektrischer Energie mittels einer Brennstoffzelle,
- Fig. 2: ein erstes Ausführungsbeispiel einer Einspritzeinrichtung,
- Fig. 3: eine abgewandeltes Ausführungsbeispiel einer Einspritzeinrichtung.
- Fig. 4: eine Abwandlung der Ausführungsform gem. Fig. 2,
- Fig. 5: eine Abwandlung der Ausführungsform gem.
Fig. 3.

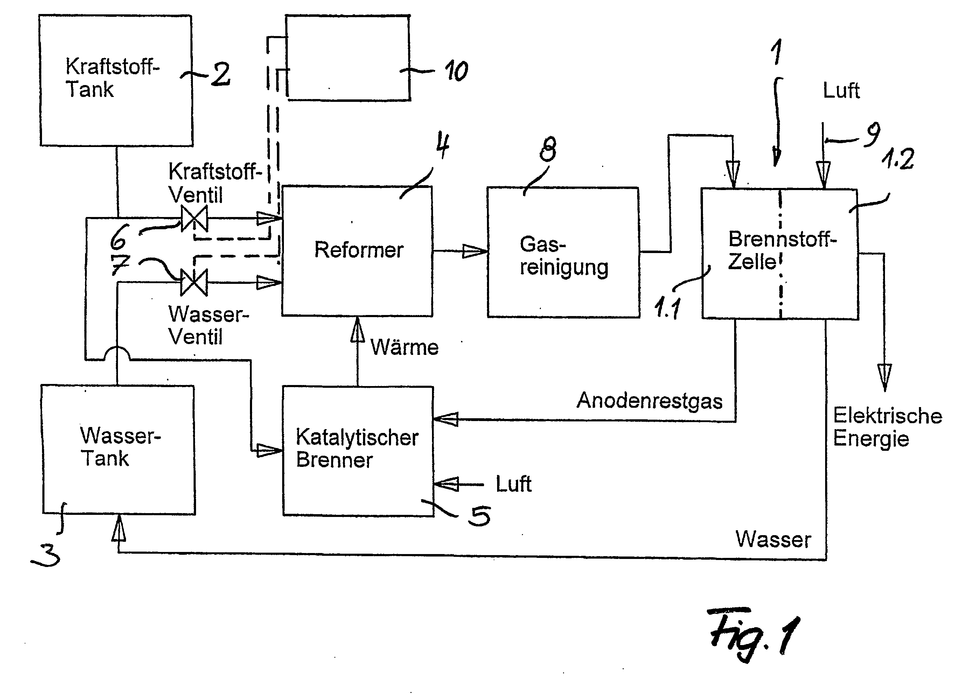

In Fig. 1 ist als Anwendungsbeispiel für eine erfindungsgemäße Einspritzeinrichtung eine Einrichtung zur Erzeugung elektrischer Energie mittels einer Brennstoffzelle 1 in Form eines Blockschaltbildes dargestellt.

Die Brennstoffzelle 1 wird aus einem Kraftstofftank 2 mit einem Kraftstoff, beispielsweise Otto-Kraftstoff, Diesel-Kraftstoff oder Methanol und aus einem Wassertank 3 mit Wasser gespeist. Um den Kraftstoff und das Wasser überhaupt in der Brennstoffzelle 1 umsetzen zu können, werden beide Flüssigkeiten in einem Reaktionsraum 4, hier einem katalytischen Reformer in Wasserstoff umgesetzt, wobei über eine Wärmeversorgung 5, beispielsweise einen katalytischen Brenner, ausreichend Reaktionswärme zugeführt werden muß. Auch ein autothermer Betrieb kann durch die Wahl des Mischungsverhältnisses und unter Zugabe eines entsprechenden Luftmassenstromes eingestellt werden.

Die Zufuhr des Kraftstoffs aus dem Kraftstofftank 2 oder eines anderen Kohlenwasserstoffs aus einem entsprechenden Vorratstank wird über ein Ventil 6 und die Zufuhr des Wassers aus dem Wassertank 3 über ein Ventil 7 in vorgebbaren Mengen zudosiert.

Aus dem Reformer 4 wird das erzeugte Wasserstoffgas über eine Gasreinigung 8 der Brennstoffzelle 1 der Anodenseite 1.1 zugeleitet und dort im Zusammenwirken mit der Kathodenseite 1.2 in elektrische Energie umgesetzt. Der Brennstoffzelle 1 wird für die erforderlichen Umsetzungen zusätzlich noch kathodenseitig Luft über einen Einlaß 9 zugeführt.

Aus der Kathodenseite 1.2 der Brennstoffzelle 1 wird Wasser abgezogen, das in den Wassertank 3 zurückgeführt wird.

Aus der Anodenseite 1.1 der Brennstoffzelle 1 wird ferner sogenanntes Anodenrestgas abgezogen, das dem Brenner 5 zugeführt wird, der als katalytischer Brenner ausgebildet ist, und dort zusammen mit Luft und ggf. unter Zufuhr von zusätzlichem Kraftstoff aus dem Kraftstofftank 2 in Wärme zur Beheizung des Reformers 4 umgesetzt wird.

Während es grundsätzlich möglich ist, über eine Steuereinrichtung 10 in den Reformer 4 mittels zweier gesonderter Einspritzdüsen mit den entsprechend ansteuerbaren Ventilen 6 und 7 sowohl Kraftstoff als auch Wasser in vorgegebenem Mengenverhältnis einzudüsen, sieht die Erfindung ein Einspritzventil vor, das über nur eine Einspritzdüse die dosierte Zufuhr von Wasser und Kraftstoff in vorgegebenem Mengenverhältnis ermöglicht.

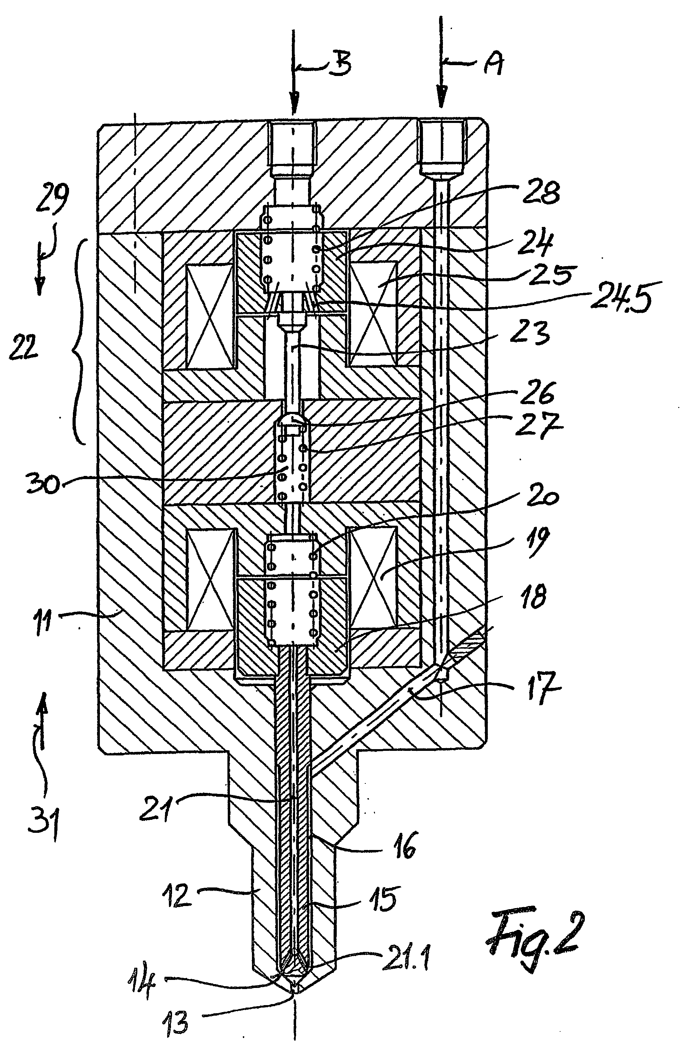

In Fig. 2 ist eine Ausführungsform der erfindungsgemäßen Art dargestellt. Ein Gehäuse 11 ist mit einem in einen Reaktionsraum einführbaren Ansatz 12 versehen, der eine Düsenöffnung 13 aufweist. In Inneren des zum Gehäuse 11 noch zugehörigen Ansatzes 12 ist der Düsenöffnung 13 ein Ventilsitz 14 und ein auf den Ventilsitz 14 aufsetzbarer Ventilkörper 15 zugeordnet. Der Ventilkörper 15 ist von einem Sammelraum 16 umschlossen, in den eine Zuleitung 17 für eine erste Flüssigkeit A einmündet.

Der Ventilkörper 15 ist an seinem der Düsenöffnung 13 abgekehrten Ende mit einem Anker 18 versehen, dem im Gehäuse 11 ein Elektromagnet 19 zugeordnet ist, der in hier nicht näher dargestellter Weise mit einer Steuereinrichtung, beispielsweise der Steuereinrichtung 10 der Anordnung gem. Fig. 1, in Verbindung steht. Über eine Schließfeder 20 wird der Ventilkörper 15 auf seinen Ventilsitz 14 gedrückt. Der Anker 18 und der Elektromagnet 19 in Verbindung mit der Rückstellfeder 20 bilden hierbei den ersten Aktuator. Wird der Aktuator betätigt, d. h. der Elektromagnet 19 bestromt, dann wird der Ventilkörper 15 von seinem Ventilsitz 14 abgehoben und die Düsenöffnung 13 geöffnet, so daß über die Zuleitung 17 die erste Flüssigkeit A in den Reaktionsraum eingespritzt werden kann.

Bei dem hier dargestellten Ausführungsbeispiel ist der Ventilkörper 15 mit einem zentralen Zuleitungskanal 21 versehen, der nahe dem Ventilsitz 14 über seitliche Austrittsöffnungen 21.1 ebenfalls in den Sammelraum 16 ausmündet. Die Zuleitung der Flüssigkeit B zum Sammelraum 16 erfolgt über ein Dosierventil 22, das über einen eigenen Aktuator betätigbar ist.

Bei dem hier dargestellten Ausführungsbeispiel weist das Dosierventil 22 im wesentlichen einen Stößel 23 auf, der mit einem Anker 24 in Verbindung steht, dem ein Elektromagnet 25 zugeordnet ist, der ebenfalls mit der Steuereinrichtung 10 in Verbindung steht. Dem Stößel 23 ist ein als Rückschlagventil ausgebildeter Ventilkörper 26 zugeordnet, dessen Rückstellfeder 27 so ausgelegt ist, daß ihre Schließkraft größer ist als die von der Flüssigkeit B auf den Schließkörper ausgeübte Druckkraft. Der Anker 24 ist hierbei in Öffnungsrichtung durch eine weitere Feder 28 beaufschlagt, die jedoch nur eine geringe Federkraft aufbringt, da durch diese Feder die Gesamtanordnung spielfrei gehalten werden soll.

Wird der aus Anker 24, Elektromagnet 25 und Stößel 23 gebildete zweite Aktuator aktiviert und der Anker 24 in Richtung des Pfeiles 29 bewegt, dann wird der Ventilkörper 26 gegen die Kraft der Rückstellfeder 27 aufgestoßen, so daß die Flüssigkeit B durch die Durchtrittskanäle 24.5, den vorhandenen Verbindungskanal 30 und die Zuleitung 21 im Ventilkörper 15 bei geschlossener Düsenöffnung 13 in den Sammelraum 16 einströmen kann. Dies gilt unter der Voraussetzung, daß die Flüssigkeit B unter einem höheren Vordruck steht als die Flüssigkeit A.

Aufgrund des höheren Druckes wird bei geöffnetem Dosierventil 22 durch die in den Sammelraum 16 einströmende Menge der Flüssigkeit B die entsprechende Menge der Flüssigkeit A aus dem Sammelraum 16 in die Zuleitung 17 zurückgedrückt. Die Öffnungsdauer des Dosierventils 22 bestimmt hierbei die Menge der im Sammelraum 16 der Flüssigkeit A vorgelagerten Menge an Flüssigkeit B. Die Öffnungsdauer für das Dosierventil 22 und damit die vorgelagerte Menge an Flüssigkeit B wird über die Steuereinrichtung 10 entsprechend dem vorgesehenen Mengenverhältnis vorgegeben.

Wird nun der erste Aktuator betätigt, dann bewegt sich der Anker 18 in Richtung des Pfeiles 31, so daß der Ventilsitz 14 und damit die Einspritzöffnung 13 freigegeben wird. Da der Sammelraum 16 nunmehr unter dem Druck der Flüssigkeit A steht, wird die im Sammelraum 16 vorgelagerte Menge der Flüssigkeit B und entsprechend der öffnungsdauer des Ventilskörpers 15 auch eine entsprechende Menge der Flüssigkeit A in den Reaktionsraum eingespritzt. Das Mengenverhältnis der vorgelagerten Flüssigkeitsmenge B zur Flüssigkeitsmenge A ergibt sich dann über die Öffnungszeit des Ventilkörpers 15. Sobald der Ventilkörper 15 geschlossen wird, kann das Dosierventil 22 wieder geöffnet und erneut eine entsprechende Menge der Flüssigkeit B im Sammelraum 16 vorgelagert werden. Damit ist aber auch die Möglichkeit gegeben, nicht nur das Mengenverhältnis sondern auch die Gesamteinspritzmenge über eine Steuereinrichtung, beispielsweise die Steuereinrichtung 10 gem. Ausführungsbeispiel in Fig. 1, an wechselnde Betriebsanforderungen durch eine in bezug auf Öffnungszeiten und Phasenlage der Öffnungszeiten entsprechend aufeinander abgestimmte Taktung in der Ansteuerung der Aktuatoren von Ventilkörper 15 und Dosierventil 22 anzupassen. Der erste Aktuator und der zweite Aktuator entsprechen hierbei den Aktuatoren für die Ventile 6 und 7 in Fig. 1.

Durch eine entsprechende Ansteuerung des durch den Ventilkörper 15 mit seinem Ventilsitz 14 gebildeten Einspritzventils einerseits und einer Betätigung des Dosierventils 22 andererseits kann durch entsprechende Öffnungsstrategien im Verhältnis dieser beiden Ventile zueinander das Mengenverhältnis der beiden Flüssigkeiten A und B sowie der Gesamteinspritzmenge in bezug auf eine vorgegebene Gesamteinspritzmenge sehr feinfühlig eingestellt werden. Hierbei ist es auch möglich, während der Öffnungszeit des Einspritzventils durch ein intermittierendes Öffnen des Dosierventils 22 eine große Gesamtflüssigkeitsmenge einzuspritzen, wobei den Sammelraum 16 jeweils in der Aufeinanderfolge entsprechend kleine Mengen an Flüssigkeit B und an Flüssigkeit A durchströmen. Für diese Betriebsweise ist es zweckmäßig, wenn die Zulaufdrücke für beide Flüssigkeiten annähernd gleich sind.

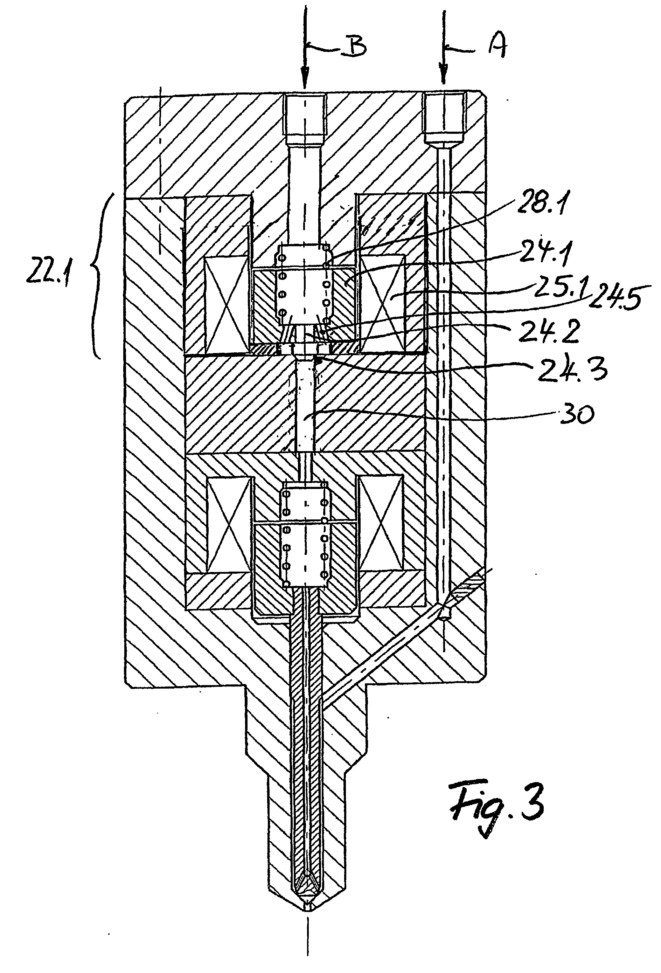

In Fig. 3 ist eine Abwandlung der Ausführungsform gem. Fig. 2 dargestellt. Die Abwandlung unterscheidet sich lediglich im Aufbau der Ausführung des Dosierventils 22. Bei der Ausführungsform in Fig. 3 ist das Dosierventil 22.1 nicht als Rückschlagventil ausgebildet. Der Anker 24.1 ist hierbei unmittelbar mit einem Ventilkörper 24.2 verbunden, der auf einem Ventilsitz 24.3 am Durchtrittskanal 30 aufsitzt. Über eine Rückstellfeder 28.1 wird der Ventilkörper 24.2 in seiner Schließstellung gehalten.

Wird der Elektromagnet 25.1 angesteuert, dann wird der Ventilkörper 24.2 von seinem Ventilsitz 24.3 abgehoben und das Dosierventil geöffnet, so daß die Flüssigkeit B wie vorbeschrieben in den Sammelraum 16 während der Dauer der Ventilöffnungszeit einströmen kann.

Die anhand der Fig. 2 und 3 beschriebene Einspritzeinrichtung kann auch dahingehend abgewandelt werden, daß das Dosierventil in die Zuleitung 17 für die Flüssigkeit A eingesetzt werden kann, während die Zuleitung 21 der Flüssigkeit B unmittelbar in den Sammelraum ausmündet. Die Ausmündungen der Zuleitungen werden dann zweckmäßigerweise entsprechend vertauscht, um sicherzustellen, daß jeweils die über das Dosierventil in den Sammelraum einzuführende Flüssigkeitsmenge möglichst in der Nähe der Düsenöffnung 13 vorgelagert wird.

Während bei den beiden dargestellten Ausführungsbeispielen das Dosierventil mit seiner Ventilöffnung möglichst nahe am Sammelraum 16 angeordnet und damit in das Gehäuse 1 der Einspritzeinrichtung integriert ist, kann grundsätzlich das Dosierventil auch außerhalb der Einspritzeinrichtung vorgesehen werden. Von Bedeutung ist, daß eine der beiden Flüssigkeiten in ihrer Menge exakt dosiert im Sammelraum 16 vorgelagert werden kann und so beide Flüssigkeiten beim Öffnen des Einspritzventils in vorgebbarem Mengenverhältnis in den Reaktionsraum eingedüst werden können.

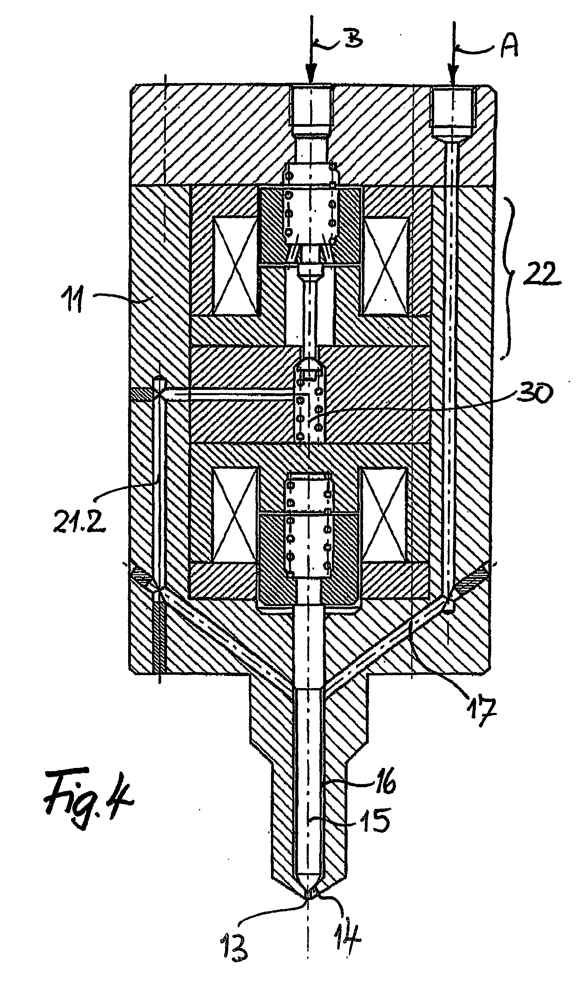

Die in Fig. 4 dargestellte, gem. Fig. 2 abgewandelte Ausführungsform unterscheidet sich lediglich in der Art der Zufuhr der Flüssigkeit B zum Sammelraum 16. Im übrigen entspricht der Aufbau der Fig. 2, so daß auf die vorstehende Beschreibung verwiesen werden kann. Gleiche Bauteile sind mit gleichen Bezugszeichen versehen.

Bei der Ausführungsform gem. Fig. 4 erfolgt die Zufuhr der Flüssigkeit B aus dem zentralen Verbindungskanal 30 über einen durch das Gehäuse 11 geführten Zuleitungskanal 21.2, der hier in den Sammelraum 16 etwa in Höhe der Ausmündung der Zuleitung 17 für die Flüssigkeit A ausmündet. Der Ventilkörper ist hierbei massiv ausgebildet.

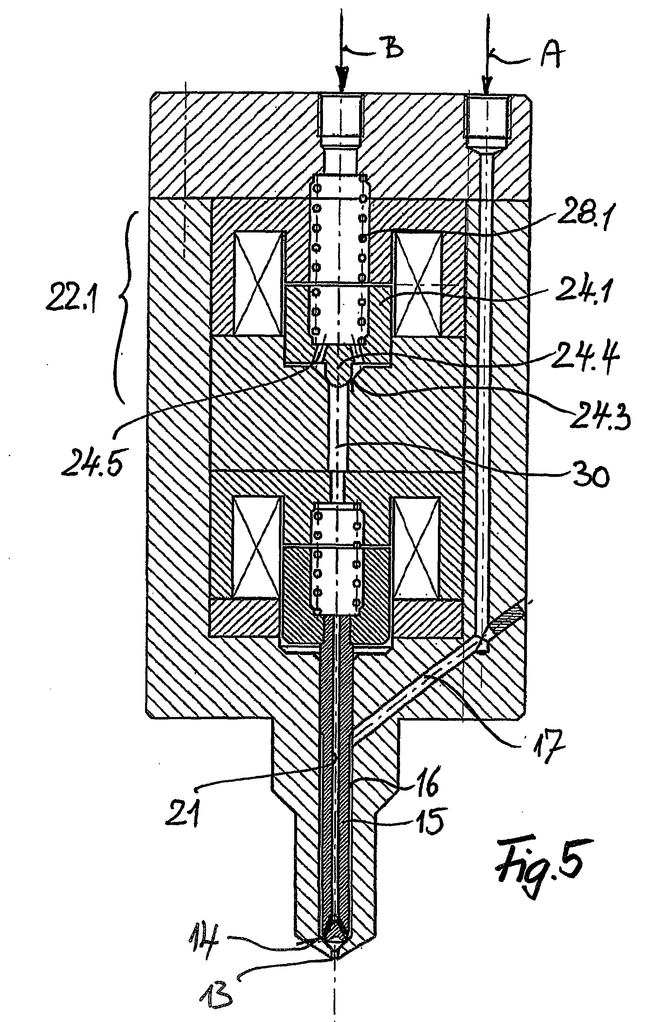

Die Ausführungsform gem. Fig. 5 entspricht im Aufbau der Ausführungsform gem. Fig. 3, so daß auf die vorstehende Beschreibung verwiesen werden kann. Gleiche Bauteile sind wiederum mit den gleichen Bezugszeichen versehen.

Bei der Ausführungsform gem. Fig. 5 ist das Dosierventil 22.1 gegenüber Fig. 3 einfacher gestaltet. Der Anker 24.1 weist einen als Ventilkörper gestalteten Ansatz 24.4 auf, der auf dem Ventilsitz 24.3 am zentraler Verbindungskanal 30 aufsistzt und über die Rückstellfeder 28.1 in Schließstellung gehalten wird.

Bei Bestromung des Elektromagneten 25.1 wird der Anker 24.1 angehoben und der Durchfluß am Ventilsitz 24.3 freigegeben.

Die Ausgestaltung des Dosierventils 22.1 gem. Fig. 5 kann auch bei der Ausführungsform gem. Fig. 4 entsprechend angeordnet werden.

Je nach Einsatzfall kann es zweckmäßig sein, für beide Flüssigkeitszuleitungen jeweils ein Dosierventil vorzusehen, so daß durch Taktung beider Dosierventile in entsprechender Phasenlage zueinander und entsprechenden Taktzeiten, bei geöffnetem Einspritzventil, die Flüssigkeiten in exaktem Mengenverhältnis zueinander geführt werden können.

## Patentansprüche

1. Einspritzeinrichtung zum dosierten Einspritzen von zwei Flüssigkeiten in vorgebbaren Mengenverhältnissen in einen Reaktionsraum, mit einem Gehäuse (1), das eine Einspritzdüse aufweist, deren Düsenöffnung (13) mit Ventilsitz (14) im Gehäuse (1) und einem auf dem Ventilsitz (14) aufsetzbaren Ventilkörper (15) ein Einspritzventil bildet, mit einem der Düsenöffnung (13) zugeordneten Sammelraum (16), der mit einer Zuleitung (17) für die erste Flüssigkeit (A) und mit einer Zuleitung (21) für die zweite Flüssigkeit (B) verbunden ist, wobei wenigstens eine Zuleitung (21) zum Sammelraum durch ein Dosierventil (22) absperrbar ist, das über einen zweiten Aktuator betätigbar ist und wobei eine der beiden Flüssigkeiten unter höherem Druck steht als die andere Flüssigkeit, sowie mit einer Steuereinrichtung (10) wobei wenigstens ein Ventil getaktet angesteuert wird **dadurch gekennzeichnet, daß** der Ventilkörper (15) durch einen ersten Aktuator bewegbar ist, und daß über die Steuereinrichtung die beiden Aktuatoren in Abhängigkeit von einer lastbedingten Gesamteinspritzmenge und in Abhängigkeit des vorgegebenen Mengenverhältnisses der beiden Flüssigkeiten (A, B) zueinander ansteuerbar sind.

2. Einrichtung nach Anspruch 1, **dadurch gekennzeichnet, daß** zumindest das Dosierventil getaktet angesteuert wird.

3. Einrichtung nach Anspruch 1 oder 2, **dadurch gekennzeichnet, daß** der Sammelraum (16) den Ventilkörper (15) des Einspritzventils umschließt.

4. Einrichtung nach Anspruch 1, 2 oder 3, **dadurch gekennzeichnet, daß** der Ventilkörper (15) des Einspritzventils im Bereich des Sammelraums (16) nadelförmig ausgebildet ist.

5. Einrichtung nach einem der Ansprüche 1 bis 4, **dadurch gekennzeichnet, daß** die Zuleitung (21) für eine der beiden Flüssigkeiten im Ventilkörper (15) des Einspritzventils verläuft und über wenigstens eine Austrittsöffnung (21.1) in den Sammelraum (16) ausmündet.

6. Einrichtung nach einem der Ansprüche 1 bis 5, **dadurch gekennzeichnet, daß** die Zuleitung (17) für die andere Flüssigkeit über eine Ausmündung direkt in den Sammelraum (16) mündet.

7. Einrichtung nach einem der Ansprüche 1 bis 6, **dadurch gekennzeichnet, daß** die Ausmündung der Zuleitung für die Flüssigkeit mit dem höheren Druck in der Nähe des Ventilsitzes (14) des Ventilkörpers (15) angeordnet ist.

8. Einrichtung nach einem der Ansprüche 1 bis 7, **dadurch gekennzeichnet, daß** das Dosierventil (22) der Zuleitung für die Flüssigkeit mit dem höheren Druck zugeordnet ist.

9. Einrichtung nach einem der Ansprüche 1 bis 8, **dadurch gekennzeichnet, daß** das Dosierventil (22) als Rückschlagventil ausgebildet ist, das über den zweiten Aktuator öffenbar ist.

10. Einrichtung nach einem der Ansprüche 1 bis 9, **dadurch gekennzeichnet, daß** das als Rückschlagventil ausgebildete Dosierventil (22) in Durchflußrichtung öffenbar ist.

11. Einrichtung nach einem der Ansprüche 1 bis 10, **dadurch gekennzeichnet, daß** die Aktuatoren als elektromagnetische Aktuatoren ausgebildet sind, wobei die bewegbaren Ventilkörper (15; 23, 26) des Einspritzventils und des Dosierventils jeweils mit einem Anker (18; 24) und mit einer in Schließrichtung wirksamen Rückstellfeder (20; 27) verbunden sind.

12. Verwendung der Einspritzeinrichtung nach einem der Ansprüche 1 bis 11 an einem katalytischen Reformer (4) zur Erzeugung eines gasförmigen Brennstoffs für eine Brennstoffzelle (1).

## Claims

1. Injection device for the metered injection of two fluids in predeterminable quantitative ratios into a reaction chamber, with a housing (1) comprising an injection nozzle whose injection orifice (13), together with a valve seat (14) in the housing (1) and a valve body (15), which can be placed on the valve seat (14), forms an injection valve, with a collection chamber (16) which is associated with the injection orifice (13) and is connected to a feed line (17) for the first fluid (A) and to a feed line (21) for the second fluid (B), wherein at least one feed line (21) to the collection chamber can be shut off by a metering valve (22) which can be operated by means of a second actuator, and wherein one of the two fluids is under a higher pressure than the other fluid, and with a control device (10), wherein at least one valve is triggered in a timed manner, **characterised in that** the valve body (15) can be moved by a first actuator, and that the two actuators can be triggered by means of the control device in accordance with a load-dependent total injected quantity and in accordance with the predetermined quantitative ratios between the two fluids (A, B).

2. Device according to Claim 1, **characterised in that** at least the metering valve is triggered in a timed manner.

3. Device according to Claim 1 or 2, **characterised in that** the collection chamber (16) surrounds the valve body (15) of the injection valve.

4. Device according to Claim 1, 2 or 3, **characterised in that** the valve body (15) of the injection valve is needle-shaped in the region of the collection chamber (16).

5. Device according to any one of Claims 1 to 4, **characterised in that** the feed line (21) for one of the two fluids extends in the valve body (15) of the injection valve and opens into the collection space (16) via at least one outlet opening (21.1).

6. Device according to any one of Claims 1 to 5, **characterised in that** the feed line (17) for the other fluid opens directly into the collection space (16) via a mouth.

7. Device according to any one of Claims 1 to 6, **characterised in that** the mouth of the feed line for the fluid under the higher pressure is disposed in the vicinity of the valve seat (14) of the valve body (15).

8. Device according to any one of Claims 1 to 7, **characterised in that** the metering valve (22) is associated with the feed line for the fluid under the higher pressure.

9. Device according to any one of Claims 1 to 8, **characterised in that** the metering valve (22) is formed as a non-return valve which can be opened by means of the second actuator.

10. Device according to any one of Claims 1 to 9, **characterised in that** the metering valve (22) formed as a non-return valve can be opened in the flow direction.

11. Device according to any one of Claims 1 to 10, **characterised in that** the actuators are formed as electromagnetic actuators, wherein the mobile valve bodies (15; 23, 26) of the injection valve and of the metering valve are in each case connected to an armature (18; 24) and to a return spring (20; 27) which is active in the closing direction.

12. Use of the injection device according to any one of Claims 1 to 11 in a catalytic reformer (4) for producing a gaseous fuel for a fuel cell (1).

## Revendications

1. Dispositif d'injection pour l'injection dosée de deux liquides selon des rapports quantitatifs prédéfinis dans une chambre de réaction, comprenant un boîtier (1) muni d'une buse d'injection dont l'ouverture de buse (13) avec siège de soupape (14) dans le boîtier (1) et un corps de soupape (15) pouvant être placé sur le siège de soupape (14) forme un injecteur, avec une chambre collectrice (16) associée à l'ouverture de buse (13) et reliée à une conduite d'amenée (17) pour le premier liquide (A) et à une conduite d'amenée (21) pour le deuxième liquide (B), au moins une conduite d'amenée (21) vers la chambre collectrice pouvant être bloquée par une soupape de dosage (22) actionnable par un deuxième actionneur, et l'un des deux liquides étant sous une pression plus élevée que l'autre liquide, ainsi qu'avec un dispositif de commande (10), au moins une soupape étant commandée de façon cadencée,
**caractérisé en ce que** le corps de soupape (15) est déplaçable par un premier actionneur, et que le dispositif de commande permet de commander les deux actionneurs en fonction d'une quantité d'injection totale définie par la charge et en fonction du rapport quantitatif prédéfini entre les deux liquides (A, B).

2. Dispositif selon la revendication 1, **caractérisé en ce qu'**au moins la soupape de dosage est commandée de façon cadencée.

3. Dispositif selon la revendication 1 ou 2, **caractérisé en ce que** la chambre collectrice (16) entoure le corps de soupape (15) de l'injecteur.

4. Dispositif selon la revendication 1, 2 ou 3, **caractérisé en ce que** dans la zone de la chambre collectrice (16) le corps de soupape (15) de l'injecteur présente la forme d'une aiguille.

5. Dispositif selon l'une quelconque des revendications 1 à 4, **caractérisé en ce que** la conduite d'amenée (21) pour l'un des deux liquides s'étend dans le corps de soupape (15) de l'injecteur et débouche par au moins une ouverture de sortie (21.1) dans la chambre collectrice (16).

6. Dispositif selon l'une quelconque des revendications 1 à 5, **caractérisé en ce que** la conduite d'amenée (17) pour l'autre liquide débouche directement dans la chambre collectrice (16) par l'intermédiaire d'une bouche de sortie.

7. Dispositif selon l'une quelconque des revendications 1 à 6, **caractérisé en ce que** la bouche de sortie de la conduite d'amenée pour le liquide avec la pression plus élevée est disposée à proximité du siège de soupape (14) du corps de soupape (15).

8. Dispositif selon l'une quelconque des revendications 1 à 7, **caractérisé en ce que** la soupape de dosage (22) est associée à la conduite d'amenée pour le liquide avec la pression plus élevée.

9. Dispositif selon l'une quelconque des revendications 1 à 8, **caractérisé en ce que** la soupape de dosage (22) présente la forme d'un clapet anti-retour pouvant être ouvert par le deuxième actionneur.

10. Dispositif selon l'une quelconque des revendications 1 à 9, **caractérisé en ce que** la soupape de dosage (22) en forme de clapet anti-retour peut être ouverte en direction de passage.

11. Dispositif selon l'une quelconque des revendications 1 à 10, **caractérisé en ce que** les actionneurs sont des actionneurs électromagnétiques, les corps de soupape (15 ; 23, 26) mobiles de l'injecteur et de la soupape de dosage étant respectivement reliés à un induit (18 ; 24) et à un ressort de rappel (20 ; 27) agissant en direction de fermeture.

12. Utilisation du dispositif d'injection selon l'une quelconque des revendications 1 à 11 sur un reformeur catalytique (4) pour générer un combustible gazeux pour une cellule de combustible (1).
